# EUROPÄISCHE PATENTANMELDUNG

(11) **EP 2 436 897 A2**
(43) Veröffentlichungstag der Anmeldung: **04.04.2012**
(21) Anmeldenummer: 11181907.4
(22) Anmeldetag: 20.09.2011
(51) Int. Cl.: F02B 29/04, F02M 25/07, F28D 7/16, F28F 9/02

(54) **Kühler**

(30) Priorität: 04.10.2010 DE 102010041943
(71) Anmelder: MAHLE International GmbH, 70376 Stuttgart (DE)
(72) Erfinder: Dittmann, Jörg, 70569 Stuttgart (DE); Jaißle, Richard, 73249 Wernau (DE)
(74) Vertreter: BRP Renaud & Partner

(57) **Zusammenfassung**

Die Erfindung betrifft einen Kühler (1), insbesondere einen Abgasrückführungskühler (AGR-Kühler) oder einen Ladeluftkühler, mit einem ersten Bauteil (2) aus einem ersten Material vorzugsweise Stahl, Edelstahl, Kunststoff oder Keramik, und einem zweiten Bauteil (3) aus einem zweiten Material, vorzugsweise Aluminium, wobei die beiden Bauteile (2,3) in einem Verbindungsbereich (4) über eine Reibrührschweißverbindung dicht miteinander verbunden sind.

## Beschreibung

Die vorliegende Erfindung betrifft einen Kühler, insbesondere einen Abgasrückführungsfühler (AGR-Kühler) oder einen Ladeluftkühler.

Einzelne Bauteile moderner Kühler werden heutzutage miteinander verschweißt, um eine stabile und insbesondere dichte Verbindung der einzelnen Bauteile miteinander gewährleisten zu können. Im Übrigen werden weitere Kühlerbauteile auch beispielsweise mittels anderer Verbindungsverfahren, zum Beispiel mittels Verschrauben, miteinander verbunden. All diesen Verbindungsverfahren ist dabei gemein, dass diese entweder aufwändig und teuer und/oder kritisch hinsichtlich dem Eintrag von Eigenspannungen sind.

Die vorliegende Erfindung beschäftigt sich daher mit dem Problem, für einen Kühler, insbesondere für einen Abgasrückführungskühler (AGR-Kühler) oder einen Ladeluftkühler eine verbesserte Herstellung anzugeben.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem an sich bekannten Kühler, der beispielsweise als Abgasrückführungskühler (AGR) oder als Ladeluftkühler ausgebildet sein kann und der ein erstes Bauteil aus einem ersten Material vorzugsweise Stahl, Edelstahl, Keramik oder Kunststoff und ein zweites Bauteil aus einem zweiten Material, vorzugsweise Leichtmetall, insbesondere aus Aluminium, aufweist, die beiden genannten Bauteile in einem gemeinsamen Verbindungsbereich über eine Reibrührschweißverbindung dicht miteinander zu verbinden. Beim Reibrührschweißen wird üblicherweise ein rotierender Stift, der aus einer zylindrischen Schulter herausragt, mit großer Kraft in den Verbindungsbereich der beiden miteinander zu verbindenden Bauteile gedrückt und entlang einer Fügelinie bewegt. Das Material wird durch die Reibung zwischen der Schulter und dem Werkstück erwärmt und durch die Rotation des Stiftes verrührt, so dass sich die beiden Bauteile in einem Warmumformprozess miteinander verbinden. Eine besondere Nahtvorbereitung sowie Schweißzusätze werden hierfür nicht benötigt. Von großem Vorteil beim Reibrührschweißen im Vergleich zu konventionellen Schweißverfahren ist, dass die Schweißtemperatur stets unterhalb des Schmelzpunkts des Leichtmetalls, das heißt beispielsweise des Aluminiums liegt, wodurch nachteilige Gefügeveränderungen beim Erstarren der Schmelze vermieden werden können. Hierdurch ist es möglich, auch die allgemein als schwer oder bedingt schmelzschweißbar klassifizierten höherfesten Aluminiumlegierungen ohne Zusatzwerkstoff und ohne große Festigkeitsverluste schweißen zu können. Zudem sind für die maschinelle Ausrüstung lediglich geringe Investitionskosten erforderlich. Weitere Vorteile mittels Reibrührschweißens hergestellter Kühler sind eine hohe statische und dynamische Nahtfestigkeit, keine Spritzer, kein Rauch, ein geringer Energieverbrauch, ein geringer Verzug, kein Zusatzwerkstoff, eine einfache Nahtvorbereitung, eine leichte Automatisierbarkeit sowie der Wegfall einer ansonsten erforderliche Schweißerprüfung. Das Reibrührschweißverfahren eignet sich nicht nur für die Verbindung von Aluminium und Stahl, insbesondere Edelstahl, sondern auch für Verbindungen von Aluminium und Kunststoff oder auch für die Verbindung von Aluminium und Keramik. Die Wahl des Materials hängt von den jeweiligen Bedingungen ab, denen der Kühler unterliegt. Also von dessen Verwendung und dessen Aufbau.

Bei einer vorteilhaften Weiterbildung der erfindungsgemäßen Lösung, ist das erste Bauteil als Kühlermantel oder als Kühlerboden ausgebildet, wogegen das zweite Bauteil als Kühlmittelstutzen, als Halter, als Zwischenstück oder als Gehäuse ausgebildet ist. Bereits diese Aufzählung lässt erahnen, dass bei dem erfindungsgemäßen Kühler unterschiedlichste Bauteile mit dem an sich bekannten Reibrührschweißverfahren miteinander verbunden werden können, wodurch dieser Kühler in großen Teilen automatisiert und dadurch qualitativ hochwertig und zugleich kostengünstig hergestellt werden kann. Durch den geringen Wärmeeintrag beim erfindungsgemäßen Reibrührschweißen muss zudem nicht befürchtet werden, dass großen Eigenspannungen in den Kühler beim Schweißen eingetragen werden, was nachträglich zu einer starken Belastung und damit auch zu einer Verringerung der Lebenserwartung des Kühlers führen kann. Die genaue Form des Kühlers ist dabei unerheblich, es sollte lediglich gewährleistet sein, dass an der Stelle, an der eine Verbindung zweier Bauteile mittels Reibrührschweißen hergestellt wird, die beiden zu verbindenden Bauteile glatt übereinander zur Anlage kommen. Die erfindungsgemäße Verwendung des an sich bekannten Verfahrens des Reibrührschweißens auf Kühler soll hier nicht auf Abgas- und Ladeluftkühler für Fahrzeuge eingeschränkt werden, dieses Verfahren kann natürlich auch auf entsprechende Kühler in der Stationären Anwendung zur Kühlung von Abgasen oder Ladeluft verwendet werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Kühler in einer Ansicht,
- Fig. 2: eine Schnittdarstellung durch den erfindungsgemäßen Kühler in einem Verbindungsbereich zweier Bauteile, die in diesem Verbindungsbereich über eine Reibrührschweißverbindung miteinander verbunden werden,
- Fig. 3a bis e: unterschiedliche Stellungen eines Stiftes zur Herstellung der Reibrührschweißverbindung,
- Fig. 4: eine Schnittdarstellung durch eine mögliche Ausführungsform eines erfindungsgemäßen Kühlers mit zwei Kühlerböden, wobei bei einem Kühlerboden ein Freiraum für eine Schweißvorrichtung vorgesehen ist,
- Fig. 5: eine Darstellung wie in Fig. 4, jedoch mit im Wesentlichen gleichen Kühlerböden,
- Fig. 6: wiederum eine Schnittdarstellung durch den erfindungsgemäßen Kühler bei einer anderen Ausführungsform, bei welcher ein Kühlermantel teilweise innerhalb und teilweise außerhalb eines Diffusors im Verbindungsbereich angeordnet ist.

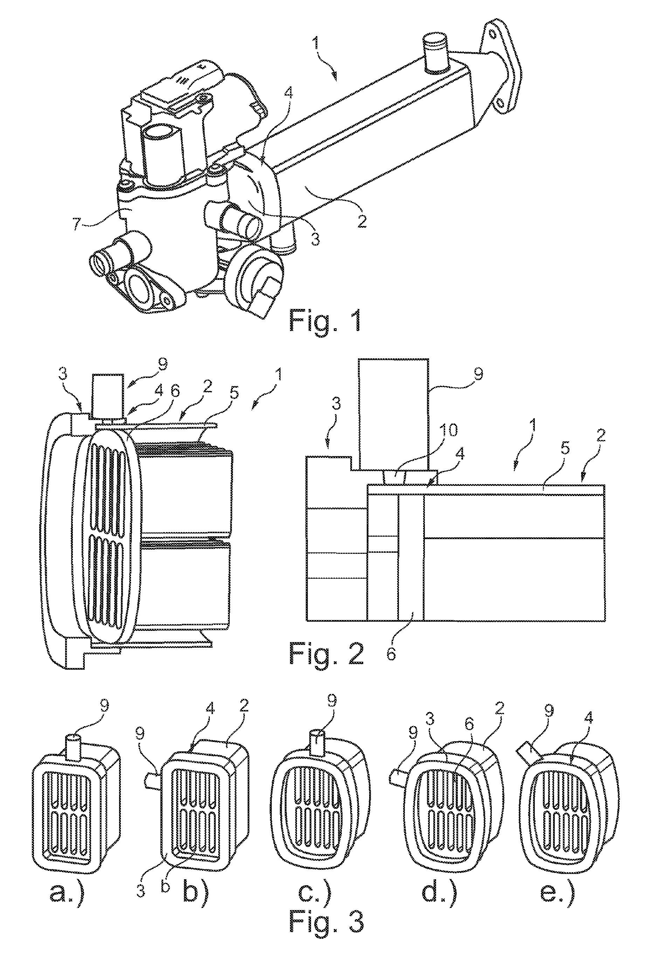

Entsprechend den Fig. 1 bis 6, weist ein erfindungsgemäßer Kühler 1, der beispielsweise als Abgasrückführungskühler (AGR-Kühler) oder als Ladeluftkühler ausgebildet sein kann, ein erstes Bauteil 2 aus Stahl, insbesondere aus Edelstahl, sowie ein zweites Bauteil aus Leichtmetall, insbesondere aus Aluminium auf, wobei die beiden Bauteile 2 und 3 in einem Verbindungsbereich 4 erfindungsgemäß über eine Reibrührschweißverbindung dicht miteinander verbunden, das heißt verschweißt sind. Sämtliche gezeigten Ausführungsformen des erfindungsgemäßen Kühlers 1 stellen dabei einen I-Kühler dar, wobei dieser selbstverständlich auch als L- oder U-Kühler ausgebildet sein kann. Das erste Bauteil 2 des erfindungsgemäßen Kühlers 1 kann beispielsweise als Kühlermantel 5 oder als Kühlerboden 6 ausgebildet sein, wogegen das zweite Bauteil 3 beispielsweise als Kühlmittelstutzen, als Halter, als Zwischenstück, als Gehäuse 7 oder als Diffusor 8 ausgebildet sein kann. In der Fig.1 ist an dem Kühler 1 ein Gehäuse 7 angeordnet, in diesem Gehäuse 7 kann eine Ventil- oder Klappeneinrichtung zum Steuern des durch den Kühler 1 strömenden Abgases vorgesehen sein.

Gemäß der Fig. 2 zeigt eine Schnittdarstellung durch den erfindungsgemäßen Kühler 1 die Herstellung der Reibrührschweißverbindung im Verbindungsbereich 4, wofür eine Schweißvorrichtung 9 mit einem rotierenden Stift 10 verwendet wird. Der rotierende Stift 10 wird während des Schweißvorgangs mit großer Kraft auf den Verbindungsbereich 4 gedrückt, wodurch das dort vorhandene Metall erwärmt und durchgeknetet wird. Es erfolgt jedoch kein Schmelzen der Bauteile 2, 3, sondern lediglich ein Warmumformen derselben, bei welchem das Aluminium mit dem Edelstahl eine Diffusionsverbindung eingeht. Der Stift 10 wird dabei mit einer Kraft von vorzugsweise mehr als 2, insbesondere von mehr als 5 kN auf den Verbindungsbereich 4 gepresst. Wie erwähnt kann das erste Bauteil 2 aus Stahl, insbesondere aus Edelstahl ausgebildet sein, wogegen das zweite Bauteil 3 aus Leichtmetall, insbesondere aus Aluminiumdruckguss ausgebildet sein kann. Je nach Anforderung an die Haltbarkeit können auch andere Werkstoffkombinationen sinnvoll sein.

Bei der Fig. 3a ist der Stift 10 von oben auf den Verbindungsbereich 4 gepresst, wogegen er in der Variante 3b seitlich über einer Kanalmitte angeordnet ist. Generell kann der Kühlerboden 6 selber, der den Verbindungsbereich 4 aussteift (vgl. auch Fig. 2) verstärkt ausgebildet sein oder nur in diesem Verbindungsbereich 4 verstärkt ausgebildet sein. Der Kühlerboden 6 kann eine eckige, insbesondere rechteckige, eckig-bauchige oder ovale, runde Querschnittsform aufweisen. Gemäß den Fig. 3c bis 3e sind wiederum unterschiedliche Stiftpositionen zum Herstellen der Reibrührschweißverbindung dargestellt. Die genaue Form des Kühlers 1 ist nicht erheblich, es sollte lediglich gewährleistet sein, dass dort, wo eine Verbindung zweier Bauteile 2,3 mittels Reibrührschweißverfahren hergestellt wird, die beiden zu verbindenden Bauteile 2,3 glatt übereinander zur Anlage kommen, wie dies in Fig. 2 dargestellt ist.

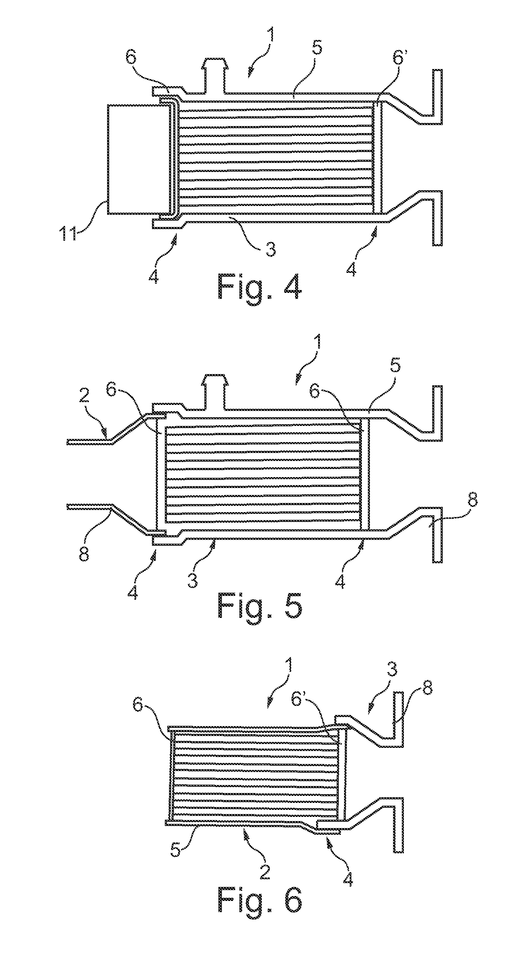

In den Figuren 4 bis 6 sind verschiedene Verbindungsvarianten von Kühlermantel 5, Kühlerboden 6 und Diffusor 8 dargestellt.

Betrachtet man die Fig. 4, so kann man erkennen, dass auf der linken Seite des Kühlers 1 ein Freiraum 11 für die Schweißvorrichtung 9 vorgesehen ist, wobei der Kühlerboden 6 auf der linken Seite deutlich dünner ausgebildet ist als der verstärkte Kühlerboden 6' auf der rechten Seite des Kühlers 1. Der Kühlerboden 6 hat zudem einen umgebogenen Rand mit dem er glatt an dem Vorsprung des Kühlermantels 5 anliegt und an dieser Stelle die Verbindung mit dem Reibrührschweißverfahren erzeugt werden kann. Durch den umgebogenen Rand kann der Kühlerboden 6 im Vergleich zum Kühlerboden 6' relativ dünn ausgestaltet werden. Je nach Bedarf kann auch auf beiden Seiten des Kühlers 1 solch ein dünnerer Kühlerboden 6 verwendet werden. Falls ein U-förmiger Kühler 1 vorgesehen ist, kann der eine Kühlerboden 6 so ausgebildet werden. Das zweite Bauteil 3 ist hier als Kühlermantel 5 ausgebildet, es besteht beispielsweise aus Aluminium, insbesondere aus Aluminiumguss, Aluminiumdruckguss oder fließgepreßtem Aluminium. Es kann auf der linken Seite des Kühlers 1 auch ein Diffusor 8 oder ein Schaltventil angeordnet sein, der/das über andere Mittel mit dem Kühler 1 nach dessen Fertigstellung verbunden wird.

Eine ähnliche Darstellung wie in Fig. 4 ist in Fig. 5 gezeigt, wobei hier der linken Seite des Kühlers 1 ein Diffusor 8 angeordnet ist, der in diesem Fall das erste Bauteil 2 darstellt. Ebenfalls als erstes Bauteil 2 gesehen werden kann bei dem Kühler 1 gemäß der Fig. 5 der Kühlerboden 6, der zur Realisierung des Reibrührschweißverfahrens verstärkt ist. Der Kühlermantel 5 umgreift dabei den Diffusor 8, wobei der Diffusor 8 wiederum den Kühlerboden 6 umschließt.

Schließlich sind zwei weitere Verbindungsmöglichkeiten in der Fig. 6 dargestellt. Es ist ein Kühler 1 zu sehen, bei welchem der Kühlerboden 6' auf der rechten Seite ebenfalls verstärkt ist, wogegen der Kühlerboden 6 auf der linken Seite dünner ist. Betrachtet man den Kühler 1 auf der rechten Seite, so kann man erkennen, dass der Diffusor 8 auf der Oberseite des Kühlers 1 außerhalb des Kühlermantels 5 verläuft. An der Unterseite ist eine alternative Verbindung dargestellt. Hier ist der Diffusor 8 zwischen Kühlermantel 5 und Kühlerboden 6' angeordnet, d.h. dass der Diffusor 8 innerhalb des Kühlermantels 5 verläuft, von diesem umgriffen wird. Der Kühlermantel 5 und der Kühlerboden 6, 6' stellen dabei das erste Bauteil 2 dar, wogegen der Diffusor 8 das zweite Bauteil 3 darstellt.

Mit dem erfindungsgemäßen Kühler 1, bei welchem einzelne Bauteile 2 und 3 mittels Reibrührschweißverbindung miteinander verbunden sind, lassen sich wesentliche Vorteile realisieren:
- die Schweißtemperatur liegt unterhalb des Schmelzpunkts der Bauteile 2, 3,
- es können hohe statische und dynamische Nahtfestigkeiten erreicht werden,
- es entstehen keine Schweißspritzer und kein Rauch, das heißt das Verfahren ist emissionsarm,
- Reibrührschweißen ist energiesparend,
- es ist kein Zusatzwerkstoff, wie beispielsweise ein Schweißdraht, erforderlich,
- aufgrund der geringen Schweißtemperaturen findet kein oder nur ein geringer Verzug sowie lediglich ein geringer Eintrag von Eigenspannungen in die Bauteile 2, 3 statt,
- das Reibrührschweißverfahren ist leicht automatisierbar.

## Patentansprüche

1. Kühler (1), insbesondere ein Abgasrückführungskühler (AGR-Kühler) oder ein Ladeluftkühler, mit einem ersten Bauteil (2) aus einem ersten Material vorzugsweise Stahl, Edelstahl, Kunststoff oder Keramik, und einem zweiten Bauteil (3) aus einem zweiten Material, vorzugsweise Aluminium, wobei die beiden Bauteile (2,3) in einem Verbindungsbereich (4) über eine Reibrührschweißverbindung dicht miteinander verbunden sind.

2. Kühler nach Anspruch 1,
**dadurch gekennzeichnet,**
**dass** der Kühler (1) als I-Kühler oder als L-Kühler mit oder ohne Diffusor ausgebildet ist.

3. Kühler nach Anspruch 1 oder 2,
**dadurch gekennzeichnet,**
**dass** der Kühler (1) ein Ventil- und/oder ein (Klappen-)gehäuse (7) aufweist.

4. Kühler nach einem der Ansprüche 1 bis 3,
**dadurch gekennzeichnet,**
**dass** der Kühler (1) einen Bypasskanal aufweist.

5. Kühler nach einem der Ansprüche 1 bis 4,
**dadurch gekennzeichnet,**
**dass** das erste Bauteil (2) als Kühlermantel (5) oder als Kühlerboden (6,6') ausgebildet ist, wogegen das zweite Bauteil (3) als Kühlmittelstutzen, als Halter, als Zwischenstück oder als Gehäuse (7) ausgebildet ist.

6. Kühler nach Anspruch 5,
**dadurch gekennzeichnet,**
**dass** der Verbindungsbereich (4) der beiden Bauteile (2,3) durch den Kühlerboden (6,6'), insbesondere einen verstärkten Kühlerboden, ausgesteift ist.

7. Kühler nach Anspruch 5 oder 6,
**dadurch gekennzeichnet,**
**dass** der Kühlerboden (6,6') einen rechteckigen oder ovalen Querschnitt aufweist.
